# FASCICULE DE BREVET EUROPEEN

(11) **EP 3 190 045 B1**
(45) Date de publication et mention de la délivrance du brevet: **05.12.2018**
(21) Numéro de dépôt: 16207586.5
(22) Date de dépôt: 30.12.2016
(51) Int. Cl.: B64C 25/34, B64C 25/50, B64C 25/62

(54) **TRAIN D'ATTERRISSAGE POUR AÉRONEF COMPORTANT UN AMORTISSEUR SECONDAIRE ANTI-SHIMMY**
FAHRWERK FÜR EIN LUFTFAHRZEUG, DAS MIT EINEM SEKUNDÄREN ANTI-SHIMMY-DÄMPFER AUSGESTATTET IST
A LANDING-GEAR ASSEMBLY FOR AN AIRCRAFT, THE LANDING-GEAR ASSEMBLY INCLUDING A SECONDARY SHIMMY DAMPER

(30) Priorité: 05.01.2016 FR 1650054
(43) Date de publication de la demande: 12.07.2017
(73) Titulaire: Safran Landing Systems, 78140 Vélizy-Villacoublay (FR)
(72) Inventeur: DAUPHIN, Florent, 78140 VELIZY-VILLACOUBLAY (FR); FORTIER, Florent, 78140 VELIZY-VILLACOUBLAY (FR); DUBOIS, Sébastien, 78140 VELIZY-VILLACOUBLAY (FR)
(74) Mandataire: Lavialle, Bruno François Stéphane

(56) Documents cités:
- WO-A1-00/58642
- US-A- 2 656 995
- US-A- 2 747 818

## Description

La présente invention porte sur un train d'atterrissage pour aéronef comportant un amortisseur secondaire.

### ARRIERE PLAN DE L'INVENTION

Il est connu par exemple du document brevet WO200058642, un train d'atterrissage pour aéronef comprenant :
- un axe d'essieu agencé pour porter des roues de roulage de l'aéronef sur le sol ;
- une jambe présentant une première partie portant ledit axe d'essieu et une seconde partie adaptée à être reliée une structure porteuse appartenant à l'aéronef, cette jambe s'étendant suivant un axe principal de la jambe passant par ces première et seconde parties de jambe ;
- un mécanisme d'orientation adapté à orienter la première partie de la jambe par rapport à la seconde partie de la jambe par rotation de la première partie de jambe selon un axe d'orientation s'étendant le long de la jambe;
- un amortisseur principal agencé pour amortir des déplacements axiaux de la première partie de jambe par rapport à la seconde partie de jambe ; et
- un premier amortisseur secondaire adapté à amortir un mouvement d'oscillation angulaire de la première partie de jambe par rapport à la seconde partie de jambe selon ledit axe d'orientation.

Ce type de train d'atterrissage pour aéronef est pourvu d'un mécanisme d'orientation pour orienter l'axe d'essieu qui porte les roues par rapport à la seconde partie de jambe qui est liée à la structure porteuse de l'aéronef.

Sur ce type de train d'atterrissage, lors du roulage, un phénomène vibratoire couramment appelé shimmy peut apparaître. Ce phénomène vibratoire peut créer un inconfort, et dans le pire des cas peut entraîner la rupture de certaines pièces du train d'atterrissage. Il est donc souhaitable de les supprimer.

Ces phénomènes vibratoires / oscillatoires dépendent de plusieurs facteurs comme la charge du train d'atterrissage, sa forme, sa conception, sa flexibilité, la vitesse du roulage.

Afin d'atténuer ce phénomène, le document brevet WO200058642 suggère d'embarquer un amortisseur particulier, dit amortisseur anti-shimmy ou ci-après amortisseur secondaire. Dans ce document brevet, l'amortisseur secondaire couple la seconde partie de la jambe qui est liée à la structure de l'aéronef avec la première partie de la jambe d'atterrisseur qui porte l'axe d'essieu. Ce couplage mécanique des première et seconde parties de la jambe via l'amortisseur secondaire (amortisseur anti-shimmy) permet d'amortir des oscillations angulaires relatives entre les première et seconde parties de la jambe autour de l'axe principal de la jambe qui est ici parallèle et confondu avec l'axe d'orientation de la première partie de jambe.

L'intégration de ce type d'amortisseur anti-shimmy dans la géométrie du train d'atterrissage est problématique puisque cet amortisseur secondaire doit réaliser sa fonction d'amortissement tout en permettant le passage du train entre une configuration déployée hors de la soute à train et une configuration rétractée où le train se trouve à l'intérieur de la soute à train.

Un autre train d'atterrissage pour aéronef est connu du document US 2 656 995 A.

### OBJET DE L'INVENTION

Un objet de la présente invention est de fournir un train d'atterrissage pour aéronef comportant au moins un premier amortisseur secondaire améliorant, au moins dans certaines conditions, l'amortissement de mouvements de shimmy de la première partie de jambe par rapport à la seconde partie de jambe.

### RESUME DE L'INVENTION

En vue de la réalisation de cet objet, il est proposé selon l'invention, un train d'atterrissage pour aéronef comprenant :
- un axe d'essieu agencé pour porter des roues de roulage de l'aéronef sur le sol ;
- une jambe présentant une première partie portant ledit axe d'essieu et une seconde partie adaptée à être reliée une structure porteuse appartenant à l'aéronef, cette jambe s'étendant suivant un axe principal de la jambe passant par ces première et seconde parties de jambe ;
- un amortisseur principal agencé pour amortir des déplacements axiaux de la première partie de jambe par rapport à la seconde partie de jambe ;
- un premier amortisseur secondaire distinct de l'amortisseur principal.

Ce train d'atterrissage selon l'invention est essentiellement caractérisé en ce que ledit premier amortisseur secondaire est porté par ledit axe d'essieu, ce premier amortisseur secondaire comportant
- une masse d'inertie; et
- des moyens de liaison reliant cette masse d'inertie audit axe d'essieu pour lui permettre de se déplacer suivant au moins un premier axe de déplacement de cette masse d'inertie par rapport à l'axe d'essieu et pour lui permettre d'osciller suivant cet au moins un premier axe de déplacement de part et d'autre d'une position fixe de repos par rapport à l'axe d'essieu, ces moyens de liaison étant adaptés à amortir ces déplacements de cette masse d'inertie vis-à-vis dudit axe d'essieu suivant ledit au moins un premier axe de déplacement , ce premier axe de déplacement s'étendant dans un plan perpendiculaire audit axe principal de la jambe.

L'amortisseur secondaire forme un ensemble Masse + moyens de liaison exclusivement porté par l'axe d'essieu et qui permet d'amortir des mouvements de la seconde partie de jambe (bas de la jambe) dans un plan perpendiculaire à l'axe principal de jambe et vis-à-vis de la première partie de jambe. Selon le cas ces mouvements relatifs amortis par l'amortisseur secondaire peuvent être :
- des mouvements d'oscillation angulaire en rotation de la seconde partie de jambe (bas de jambe) selon ledit axe d'orientation ; et/ou
- des mouvements d'oscillation en translation de la première partie de jambe par rapport à la seconde partie de jambe et selon le plan perpendiculaire à l'axe principal de jambe.

Ces mouvements d'oscillation angulaire en rotation résultent d'une torsion de la jambe autour de son axe principal.

Les mouvements de translation résultent, par exemple, d'une flexion de la jambe le long de son axe principal qui se traduit par un déplacement de la première partie de jambe selon une direction de déplacement perpendiculaire à l'axe principal de jambe.

Lorsque l'essieu est mis en mouvement dans un plan perpendiculaire à l'axe principal de jambe (par rotation ou flexion de la jambe), il transmet alors de l'énergie à la masse d'inertie de l'amortisseur secondaire via les moyens de liaison. En retour, la masse d'inertie via ces mêmes moyens de liaison applique un contre-effort à l'ensemble bas de jambe (première partie de jambe), ce qui permet l'amortissement des oscillations. En cas de déplacement de l'essieu selon un mouvement ayant une composante de déplacement selon le premier axe de déplacement, la masse d'inertie, sous l'effet de son inertie s'oppose à ce déplacement de l'essieu et se met à osciller par rapport à l'essieu, autour et de part et d'autre de sa position de repos qui est fixe par rapport à l'axe d'essieu. Ce mouvement d'oscillation de la masse d'inertie par rapport à l'axe d'essieu est progressivement amorti par les moyens de liaison. Cet amortissement du mouvement d'oscillation de la masse d'inertie permet d'amortir des oscillations de la première partie de jambe par rapport à la seconde partie de jambe.

La masse M, et les moyens de liaison sont définis préférentiellement afin de viser l'amortissement d'une fréquence propre du train.

Grâce à l'invention, le premier amortisseur secondaire est uniquement porté par l'axe d'essieu et il se trouve donc placé à proximité des zones de la jambe où l'on a les plus grandes amplitudes angulaires et axiales d'oscillations entre les première et seconde parties de la jambe. L'amortissement du shimmy est ainsi amélioré puisqu'il est réalisé à proximité de la source de l'oscillation, c'est-à-dire les roues qui transmettent des efforts / vibrations lors du roulage sur le sol.

Par ailleurs, le fait que l'amortisseur secondaire soit uniquement porté par l'essieu, c'est-à-dire intégralement embarqué sur l'essieu, facilite son intégration au train d'atterrissage puisque aucune des pièces du train, hormis éventuellement l'essieu ne doit être modifiée pour intégrer la fonction d'amortissement de shimmy.

L'invention peut être appliquée sur un train d'atterrissage dont l'axe principal de jambe passe par l'axe d'essieu, cet axe d'essieu étant perpendiculaire à l'axe principal de jambe ainsi que sur un train d'atterrissage dont l'axe principal de jambe est éloigné de l'axe d'essieu ce qui augmente l'effet d'amortissement par l'amortisseur secondaire.

Dans ce dernier cas, le premier axe de déplacement de la masse d'inertie du premier amortisseur secondaire s'étendra à distance de l'axe principal de la jambe.

Par ailleurs, l'invention peut être appliquée sur un train d'atterrissage présentant ou non un mécanisme d'orientation adapté à orienter la première partie de la jambe par rapport à la seconde partie de la jambe par rotation de la première partie de jambe selon un axe d'orientation parallèle audit axe principal de la jambe (l'axe d'orientation est généralement confondu avec l'axe principal de jambe).

Si le train d'atterrissage selon l'invention est utilisé comme train d'atterrissage principal d'aéronef, il sera alors généralement dépourvu de mécanisme d'orientation, la partie inférieure de la jambe (première partie de jambe) étant alors bloquée en rotation par rapport au haut de la jambe (seconde partie de jambe) via des compas. Ces compas ne sont pas infiniment raides, et apportent donc une souplesse d'assemblage (degré de liberté du bas de la jambe par rapport au haut de la jambe). Le shimmy entraîne un mouvement oscillatoire du bas de jambe par rapport au haut de jambe suivant l'axe principal jambe sur cette souplesse.

Si le train d'atterrissage selon l'invention est utilisé comme train de nez d'aéronef, il sera alors pourvu dudit mécanisme d'orientation.

Dans ce mode de réalisation, le couple de direction / d'orientation est transmis par les mécanismes d'orientation au bas de jambe (première partie), généralement via des compas inférieur et supérieur. Ces compas ne sont pas infiniment raides, et apportent donc aussi une souplesse dans l'assemblage. Le shimmy entraîne un mouvement oscillatoire du bas de jambe par rapport au haut de jambe suivant l'axe principal de jambe sur cette souplesse.

### BREVE DESCRIPTION DES DESSINS

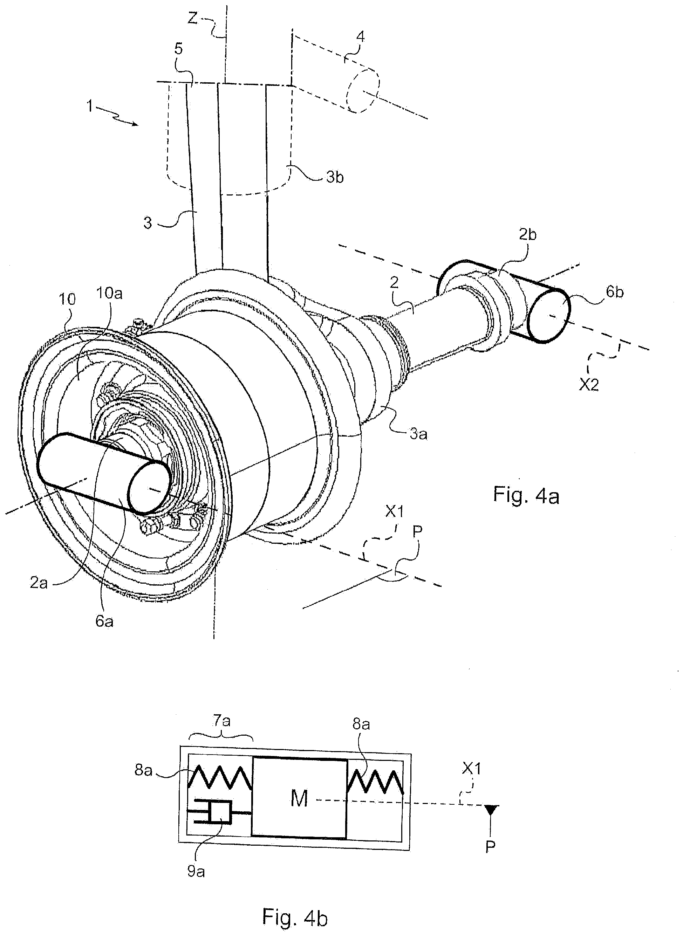

L'invention sera mieux comprise à la lumière de la description qui suit des modes particuliers de réalisation non limitatifs de l'invention, en référence aux figures des dessins annexés parmi lesquelles :
- la figure la représente un premier mode de réalisation du train d'atterrissage selon l'invention dans lequel le premier amortisseur secondaire se trouve dans un évidement longitudinal interne à l'axe d'essieu ;

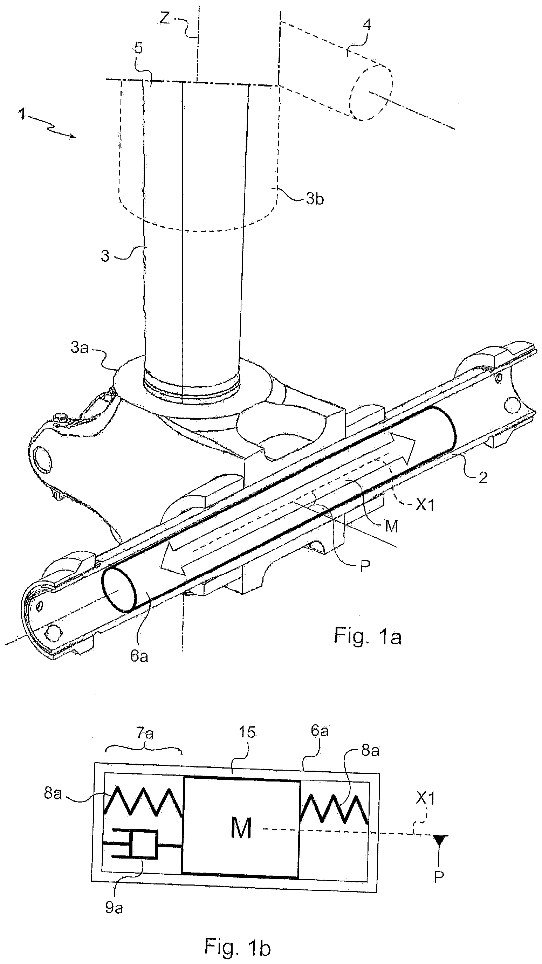

- la figure 1b est une vue schématique du premier amortisseur secondaire illustré à la figure la ;

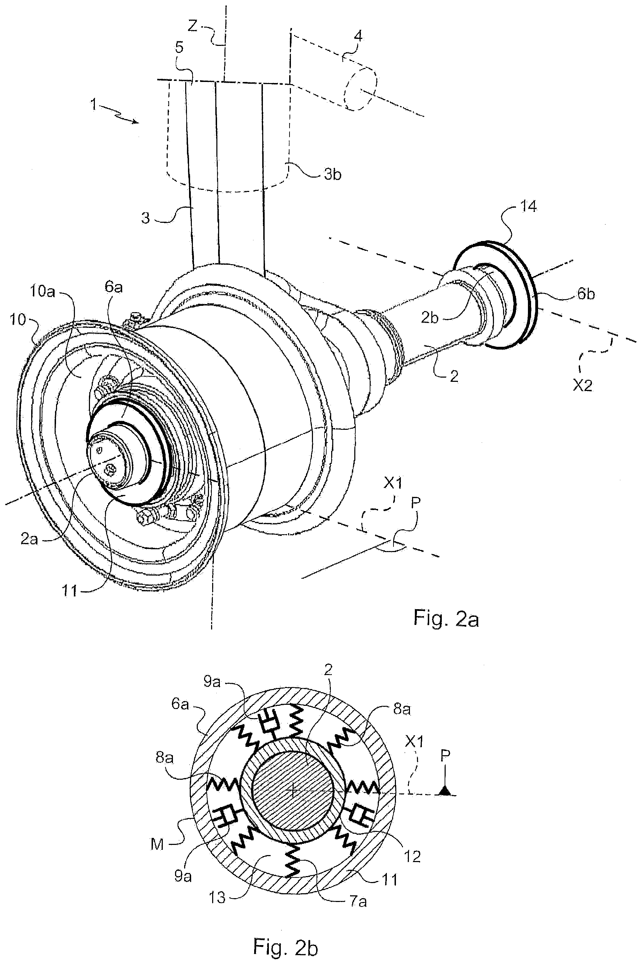

- la figure 2a représente un second mode de réalisation du train d'atterrissage selon l'invention où l'on a deux amortisseurs secondaires chacun placé à une extrémité correspondante de l'axe d'essieu, si possible chaque amortisseur secondaire est au moins partiellement positionné à l'intérieur de la jante correspondante et préférentiellement intégralement positionné à l'intérieur de la jante correspondante;
- la figure 2b représente un amortisseur secondaire conforme aux premier et second amortisseurs secondaires utilisés dans le train d'atterrissage de la figure 2a, ici l'amortisseur secondaire est de forme annulaire avec une masse d'inertie annulaire portée à l'extérieur d'une bague d'amortissement elle-même portée par un anneau de fixation destiné à être emmanché autour de l'axe d'essieu ;

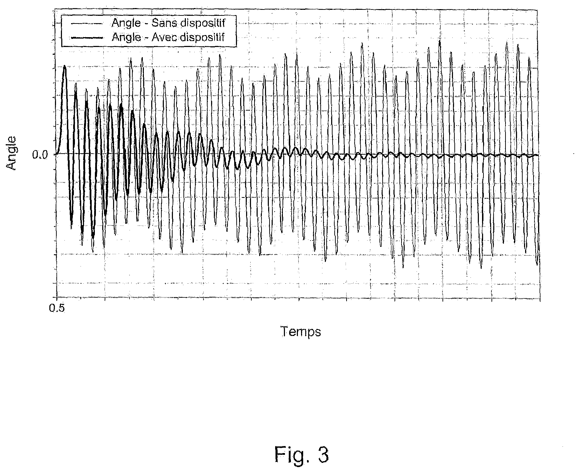

- la figure 3 illustre, les comportements en termes d'oscillations angulaires libres selon un axe d'orientation de train, de deux trains d'atterrissage en réponse à une torsion angulaire type, l'un de ces trains ne comportant pas d'amortisseur secondaire et l'autre

comportant un amortisseur secondaire selon la figure la ou de deux amortisseurs secondaires comme sur la figure 2a ou comme sur la figure 4a ;
- la figure 4a représente un troisième mode de réalisation du train d'atterrissage selon l'invention où l'on a deux amortisseurs secondaires chacun placé à une extrémité de l'axe d'essieu, ces amortisseurs sont ici des amortisseurs linéaires qui s'étendent à l'intérieur d'une des jantes du train dans la mesure du possible ;
- la figure 4b représente un amortisseur secondaire conforme aux premier et second amortisseurs secondaires utilisés dans le train d'atterrissage de la figure 4a, ici l'amortisseur secondaire est de forme cylindrique avec une masse d'inertie mobile selon un axe de déplacement de masse X1 et des moyens de liaison reliant cette masse d'inertie M à l'essieu, ces moyens de liaison amortissant des déplacements de cette masse d'inertie par rapport à l'essieu suivant l'axe X1.

### DESCRIPTION DETAILLEE DE L'INVENTION

Comme indiqué précédemment, et illustré aux figures 1a, 2a et 4a, l'invention concerne un train d'atterrissage 1 pour aéronef comprenant un axe d'essieu 2 agencé pour porter des roues de roulage de l'aéronef sur le sol.

Ce train d'atterrissage 1 comporte une jambe 3 s'étendant suivant un axe principal de jambe Z et présentant une première partie 3a portant ledit axe d'essieu 2 et une seconde partie 3b adaptée à être reliée une structure porteuse appartenant à l'aéronef. L'axe principal Z passe par les première et seconde parties de jambe 3a, 3b.

Un amortisseur principal 5 du train d'atterrissage 1 est agencé pour amortir des déplacements axiaux de la première partie de jambe 3a par rapport à la seconde partie de jambe 3b selon un axe principal de déplacement axial de la première partie de jambe 3a par rapport à la seconde partie de jambe 3b. Cet axe principal de déplacement est ici confondu avec l'axe principal de jambe Z.

La seconde partie de jambe 3b peut comprendre un caisson dans lequel coulisse la première partie de la jambe 3a, l'amortisseur principal 5 se trouvant au moins partiellement à l'intérieur de ce caisson.

Dans certains modes de réalisation de l'invention, comme ceux illustrés aux figures 1a, 2a et 4a, le train peut comporter un mécanisme d'orientation 4 du train 1 adapté à orienter la première partie 3a de la jambe par rapport à la seconde partie 3b de la jambe par rotation de la première partie de jambe selon / par rapport à un axe d'orientation qui s'étend le long de la jambe 3. Cet axe d'orientation peut être confondu avec l'axe principal de jambe Z. Un train muni d'un tel mécanisme d'orientation est généralement utilisé comme train de nez d'aéronef.

Comme indiqué précédemment, l'invention peut aussi concerner des trains ne comportant pas de mécanisme d'orientation. De tels trains sont généralement utilisés comme trains principaux d'aéronef.

Il est à noter que le déplacement axial de la première partie 3a de jambe par rapport à la seconde partie 3b de jambe est une translation de la première partie de jambe 3a le long d'un axe principal de déplacement qui est préférentiellement parallèle et éventuellement confondu avec ledit axe principal de jambe Z et avec l'axe d'orientation de l'aéronef.

Pour limiter les phénomènes d'oscillations du train autour de l'axe principal de jambe Z (phénomènes de shimmy), un premier amortisseur secondaire 6a est adapté à amortir le mouvement d'oscillation de la première partie de jambe 3a par rapport à la seconde partie de jambe 3b. Ce premier amortisseur secondaire 6a qui est porté par l'axe d'essieu 2 comporte :
- une masse d'inertie M; et
- des moyens de liaison 7a reliant cette masse d'inertie M audit axe d'essieu 2.

Ces moyens de liaison 7a sont adaptés à amortir des déplacements de cette masse d'inertie M vis-à-vis de l'axe d'essieu 2 suivant au moins un premier axe de déplacement X1 de cette masse d'inertie M par rapport à l'axe d'essieu 2.

Comme on le voit sur les différentes figures la à 2b et 4a, 4b, ce premier axe de déplacement X1 s'étend dans un plan P perpendiculaire à l'axe principal de jambe Z et se trouve à distance de cet axe Z. On note que la masse d'inertie M est uniquement portée par les moyens de liaison 7a qui sont eux même attachés à l'axe d'essieu 2.

Comme la masse d'inertie M du premier amortisseur secondaire 6a est reliée à l'axe d'essieu 2 via des moyens de liaison 7a qui réalisent un amortissement de déplacements de la masse d'inertie M par rapport à l'axe d'essieu 2 suivant au moins le premier axe de déplacement X1 qui s'étend dans un plan P perpendiculaire à l'axe principal Z, le déplacement de la masse d'inertie M par rapport à l'axe d'essieu 2 induit un amortissement de l'oscillation autour de l'axe Z.

Cet amortissement de l'oscillation autour de l'axe principal Z permet d'amortir des mouvements d'oscillation de la première partie de la jambe 3a par rapport à la seconde partie de la jambe 3b. Le dispositif est d'autant plus efficace que la distance entre le premier axe de déplacement X1 de la masse d'inertie M à l'axe principal Z est importante.

Dans le mode de réalisation de la figure 1a, le premier axe de déplacement X1 est confondu avec l'axe d'essieu 2 puisque la masse M est à l'intérieur de l'axe d'essieu, l'axe de déplacement X1 s'étendant le long de l'axe d'essieu. Ici, la distance entre l'axe X1 et l'axe principal de jambe Z est égale à la distance entre l'axe d'essieu 2 et l'axe principal Z. Le premier amortisseur secondaire 6a a donc un effet de réduction du phénomène de shimmy. Dans le mode de la figure 1a, la masse M permet d'amortir des mouvements de la première partie de jambe par rapport à la seconde partie de jambe qui présentent au moins une composante de déplacement suivant l'axe X1. Par exemple on peut amortir une rotation autour de l'axe Z ou une translation de la première partie 3a radiale à l'axe Z ou des mouvements complexes combinant oscillations angulaires et oscillations en translation.

Idéalement, la masse d'inertie M est uniquement portée par les moyens de liaison 7a ce qui implique qu'elle est uniquement soumise à des efforts d'inertie et des efforts mécaniques transmis via les moyens de liaison 7a.

L'amortissement des déplacements de la masse d'inertie M vis-à-vis de l'axe d'essieu 2 est ainsi aisément contrôlable via les seuls moyens de liaison 7a, sans avoir à modifier le reste du train d'atterrissage 1.

Préférentiellement, les moyens de liaison 7a sont non seulement adaptés à amortir des déplacements de la masse d'inertie M vis-à-vis dudit essieu 2 suivant le premier axe de déplacement X1, mais ils sont aussi adaptés à guider des déplacements de la masse d'inertie M vis-à-vis de l'essieu 2 suivant le premier axe de déplacement X1 de la masse d'inertie M par rapport à l'axe d'essieu 2. Les moyens de liaison 7a réalisent ainsi une double fonction de guidage et d'amortissement de déplacements de la masse d'inertie M suivant le premier axe de déplacement X1.

Comme illustré aux figures 1b, 2b et 4b, les moyens de liaison 7a du premier amortisseur secondaire 6a qui relient la masse d'inertie M à l'axe d'essieu 2 comportent :
- des moyens élastiques de rappel 8a de la masse d'inertie M vers ladite position fixe de repos de la masse d'inertie par rapport à l'axe d'essieu 2; et
- des moyens d'amortissement 9a qui présentent un coefficient d'amortissement de valeur prédéterminée c.

Comme illustré aux figures 1b et 4b, les moyens élastiques 8a peuvent être réalisés à l'aide d'un ou plusieurs ressorts plus ou moins contraints en fonction de la position de la masse d'inertie M par rapport à l'axe d'essieu. Sur ces figures, les moyens élastiques 8a d'un amortisseur secondaire comportent deux ressorts montés en opposition de part et d'autre de la masse M. Idéalement, ces ressorts sont précontraints pour ramener la masse vers une position de repos prédéterminée. Bien entendu d'autres types de moyens élastiques 8a sont envisageables en lieu et place de ressort, on peut utiliser une ou plusieurs pièces en matériau polymère élastique.

Les moyens d'amortissement 9a peuvent être réalisés par l'association :
- d'une ou plusieurs chambres à volumes internes variables en fonction du déplacement relatif de la masse d'inertie M vis-à-vis de l'axe d'essieu 2 ; avec
- une ou plusieurs restrictions à l'écoulement de fluide entre l'intérieur et l'extérieur de cette ou ces chambres. Une restriction permet de freiner l'écoulement du fluide vers la chambre ou hors de la chambre ce qui génère un amortissement.

Si les moyens élastiques de rappel 8a et les moyens d'amortissement 9a sont ici représentés sous la forme de moyens mécaniques séparés, il est toutefois possible de réaliser ces moyens élastiques 8a et moyens d'amortissement 9a à l'aide d'au moins une pièce en un matériau, tel qu'un élastomère, présentant à la fois des caractéristiques d'élasticité (raideur élastique) et d'amortissement (coefficient d'amortissement).

La valeur du coefficient d'amortissement c est prédéterminée pour que les moyens de liaison 7a du premier amortisseur secondaire 6a soient adaptés pour amortir le déplacement de la masse d'inertie M par rapport à l'axe d'essieu 2 et suivant le premier axe de déplacement X1.

Les moyens élastiques de rappel 8a présentent une valeur de constante de raideur k suivant le premier axe de déplacement X1 de la masse d'inertie M par rapport à l'axe d'essieu 2.

La figure 3 illustre :
- en trait fin, le mouvement d'oscillation angulaire autour de l'axe principal de jambe Z d'un train d'atterrissage ne comportant pas d'amortisseur secondaire porté par l'axe d'essieu ; et
- en trait gras, le mouvement d'oscillation angulaire autour de l'axe principal Z d'un train équipé d'un amortisseur secondaire porté par l'essieu.

Pour chacune de ces courbes le mouvement d'oscillation angulaire, est obtenu à l'aide d'une sollicitation mécanique du train dans des conditions prédéterminées et fixées de sollicitation. Par exemple la sollicitation appliquée peut être une torsion angulaire type de la jambe selon l'axe principal Z.

Lorsque le train ne comporte pas d'amortisseur secondaire, l'oscillation angulaire libre selon l'axe Z présente une amplitude oscillatoire sensiblement constante dans le temps et entretenue.

A contrario, avec un train conforme à l'invention, c'est-à-dire équipé d'au moins un amortisseur secondaire au niveau de l'axe d'essieu, on constate un fort amortissement de l'amplitude d'oscillation angulaire pendant la première seconde à compter du début de l'oscillation libre (voir courbes en trait gras).

Selon un mode de réalisation particulier de l'invention, les valeurs de coefficient d'amortissement c et de constante de raideur K de chaque amortisseur secondaire peuvent être ajustables et sélectionnées dans des plages de valeurs prédéterminées. Ceci permet d'adapter les caractéristiques d'amortissement des amortisseurs secondaires au type train d'atterrissage équipé.

La valeur de la masse M intervient aussi dans l'efficacité du système. Typiquement, la valeur de masse M de chaque amortisseur secondaire est choisie en fonction de l'amortissement souhaité du phénomène de shimmy, par chaque amortisseur secondaire.

Comme on le comprend des figures 1a, 2a et 4a, trois modes de réalisation principaux de l'invention sont envisagés.

Selon le premier de ces trois modes (voir les figures la et 1b), le premier axe de déplacement X1 de la masse d'inertie M du premier amortisseur secondaire 7a s'étend le long de l'axe d'essieu 2.

Pour cela, on peut faire en sorte que l'axe d'essieu 2 soit tubulaire et que le premier amortisseur secondaire 6a soit placé à l'intérieur de cet axe d'essieu tubulaire 2.

Dans ce mode de réalisation, l'axe d'essieu 2 est creux sur toute sa longueur, le premier amortisseur secondaire 6a étant intégralement disposé à l'intérieur de l'axe d'essieu 2. Le premier axe de déplacement X1 de la masse d'inertie M par rapport à l'essieu 2 s'étend le long de l'axe d'essieu et à l'intérieur de cet axe d'essieu 2.

Dans ce mode de réalisation, le premier amortisseur secondaire 6a peut comporter un guide 15 s'étendant autour de la masse M, entre cette masse et une face interne de l'axe d'essieu. La masse M peut ainsi coulisser à l'intérieur et le long du guide 15 en forme de tube, sans entrer en contact contre l'axe d'essieu. On évite ainsi le risque d'usure de l'axe d'essieu par les oscillations de la masse M.

Dans des modes de réalisation alternatifs de l'invention, comme sur les figures 2a et 4a, l'axe d'essieu 2 porte un second amortisseur secondaire 6b.

Ce second amortisseur secondaire 6b comporte :
- une seconde masse d'inertie M; et
- des seconds moyens de liaison reliant cette seconde masse d'inertie M audit essieu 2 pour lui permettre de se déplacer suivant au moins un second axe de déplacement X2 de cette seconde masse d'inertie M par rapport à l'axe d'essieu 2 et pour lui permettre d'osciller suivant cet au moins un second axe de déplacement X2 de part et d'autre d'une position fixe de repos de cette seconde masse d'inertie M par rapport à l'axe d'essieu 2, ces seconds moyens de liaison étant adaptés à amortir ces déplacements de cette seconde masse d'inertie M vis-à-vis dudit essieu suivant ledit au moins un second axe de déplacement X2.

Ce second axe de déplacement X2 s'étend dans un plan perpendiculaire P audit axe principal de jambe Z (ici confondu avec l'axe d'orientation) et à distance de cet axe Z. L'axe d'essieu 2 s'étend entre des première et seconde extrémités 2a, 2b de l'axe d'essieu 2. Le premier amortisseur secondaire 6a est porté par la première extrémité 2a de l'axe d'essieu 2 alors que le second amortisseur secondaire 6b est porté par la seconde extrémité 2b de l'axe d'essieu 2.

Cette seconde masse d'inertie M est ainsi agencée pour pouvoir se déplacer par rapport à l'axe d'essieu 2 suivant ledit second axe de déplacement X2. Les seconds moyens de liaison permettent à cette seconde masse d'inertie M d'osciller de part et d'autre d'une position de repos qui lui est propre, cette oscillation se faisant le long de ce second axe de déplacement X2. Ces mêmes seconds moyens de liaison amortissent ce déplacement oscillatoire de la seconde masse d'inertie M par rapport à l'axe d'essieu X2. Cet amortissement du mouvement d'oscillation de la seconde masse induit un amortissement de mouvements relatifs entre les première et seconde parties de la jambe 3.

Dans les modes de réalisation du train d'atterrissage où l'on a plusieurs amortisseurs secondaires :
- la masse d'inertie dudit premier amortisseur secondaire peut être appelée première masse d'inertie;
- la masse d'inertie du second amortisseur secondaire est appelée seconde masse d'inertie ; et
- les moyens de liaison du premier amortisseur secondaire peuvent être appelés premiers moyens de liaison.

Idéalement, les premiers moyens de liaison de la masse d'inertie du premier amortisseur secondaire et les seconds moyens de liaison de la masse d'inertie du second amortisseur secondaire, présentent une même valeur de coefficient d'amortissement c. Par ailleurs, dans les modes de réalisations où le train d'atterrissage comporte des premier et second amortisseurs secondaires 6a, 6b, le premier axe de déplacement de la première masse d'inertie du premier amortisseur secondaire est préférentiellement parallèle au second axe de déplacement X2 de la seconde masse d'inertie M du second amortisseur secondaire 6b. Ceci permet une symétrie de comportement des deux amortisseurs secondaire.

Les figures 2a, 2b, 4a, 4b montrent deux modes de réalisation particuliers de l'invention où l'on a des premier et second amortisseurs secondaires assemblés aux extrémités 2a, 2b de l'axe d'essieu. Selon ces modes, l'axe d'essieu 2 embarque à sa première extrémité le premier amortisseur secondaire 6a et à sa seconde extrémité 2b le second amortisseur secondaire 6b.

On voit que le train d'atterrissage comporte une première jante 10 pour supporter une première roue de roulage de l'aéronef et une seconde jante (non représentée pour des questions de clarté) pour supporter une seconde roue de roulage de l'aéronef. Ces première et seconde jantes sont montées à rotation selon l'axe d'essieu 2 et autour de cet axe. Dans chacun de ces modes de réalisation, le premier amortisseur secondaire 6a est au moins partiellement disposé à l'intérieur d'une zone creuse 10a de la première jante 10 et le second amortisseur secondaire 6b est au moins partiellement disposé à l'intérieur d'une zone creuse de la seconde jante. Pour limiter l'encombrement, il est préférable que chaque premier et second amortisseur secondaire soit intégralement disposé dans la zone creuse de la jante correspondante.

Dans le mode de réalisation des figures 2a et 2b, la masse d'inertie M du premier amortisseur secondaire 6a est en forme d'anneau 11 et s'étend autour de la première extrémité 2a dudit axe d'essieu. La seconde masse d'inertie du second amortisseur secondaire 6b est aussi en forme d'anneau 14 et s'étend autour de la seconde extrémité 2b dudit axe d'essieu 2.

Les moyens de liaison 7a qui relient la masse d'inertie M du premier amortisseur secondaire 6a à l'axe d'essieu 2 comportent :
- un premier anneau de fixation 12 assujetti avec l'axe d'essieu 2 ; et
- un manchon annulaire élastique 13 concentrique de la masse d'inertie M du premier amortisseur secondaire 6a.

Ce manchon annulaire élastique 13 est placé entre le premier anneau de fixation 12 et la masse d'inertie M du premier amortisseur secondaire 6a.

Idéalement, dans ce mode de réalisation, les moyens de liaison du second amortisseur secondaire 6b comportent aussi un anneau de fixation, dit second anneau de fixation. Ce second anneau de fixation est assujetti avec l'axe d'essieu 2. Le second amortisseur secondaire 6b comprend aussi un manchon annulaire élastique concentrique de la seconde masse d'inertie. Ce manchon annulaire élastique est placé entre le second anneau de fixation et la seconde masse d'inertie, en forme d'anneau 14.

Dans ce mode de réalisation :
- d'une part le manchon annulaire élastique 13 du premier amortisseur secondaire 6a s'étend entre l'anneau de fixation 12 et la masse d'inertie M du premier amortisseur secondaire 6a ; et
- d'autre part le manchon annulaire élastique du second amortisseur secondaire 6b s'étend entre l'anneau de fixation et la masse d'inertie du second amortisseur secondaire 6b.

On peut faire en sorte que chaque manchon annulaire élastique soit en matériau polymère apte à conférer une dissipation d'énergie permettant l'amortissement de mouvements entre la masse d'inertie et l'axe d'essieu.

Les premier et second amortisseurs secondaires 6a, 6b sont semblables entre eux et ont chacun une masse d'inertie M en forme d'anneau d'un même poids donné, un anneau de fixation et un manchon élastique reliant la masse à l'anneau de fixation d'une même valeur de coefficient d'amortissement c et d'une même valeur de raideur élastique k. L'avantage de ce type d'amortisseur secondaire doté d'une masse d'inertie en forme d'anneau est de pouvoir amortir des oscillations suivant plusieurs axes de déplacement radiaux ou axiaux par rapport à l'axe de révolution de l'anneau.

Dans le mode de réalisation des figures 4a et 4b, les premier et second amortisseurs secondaires 6a, 6b sont des amortisseurs linéaires. Le terme amortisseur linéaire désigne le fait que l'amortisseur comporte une masse d'inertie se déplaçant suivant un seul axe donné propre à l'amortisseur.

Le premier axe de déplacement X1 de la masse d'inertie M du premier amortisseur secondaire 6a est parallèle au second axe de déplacement X2 de la seconde masse d'inertie M du second amortisseur secondaire 6b.

Ces premier et second axes de déplacement X1, X2 des masses d'inertie M des premier et second amortisseurs secondaires 6a, 6b sont préférentiellement perpendiculaires à l'axe d'essieu 2 et préférentiellement parallèles entre eux.

Ce type d'amortisseur linéaire permet de seulement amortir les oscillations angulaires autour de l'axe Z.

L'invention n'est pas limitée à ce qui vient d'être décrit, en particulier il est possible qu'un même train d'atterrissage comporte plusieurs amortisseurs secondaires tels que ceux des figures 1a, 2a, 4a, chacun de ces amortisseurs secondaires étant intégralement porté par l'axe d'essieu.

## Revendications

1. Train d'atterrissage (1) pour aéronef comprenant :
- un axe d'essieu (2) agencé pour porter des roues de roulage de l'aéronef sur le sol ;
- une jambe (3) présentant une première partie (3a) portant ledit axe d'essieu (2) et une seconde partie (3b) adaptée à être reliée une structure porteuse appartenant à l'aéronef, cette jambe s'étendant suivant un axe principal de la jambe passant par ces première et seconde parties de jambe ;
- un amortisseur principal (5) agencé pour amortir des déplacements axiaux de la première partie de jambe (3a) par rapport à la seconde partie de jambe (3b) ;
- un premier amortisseur secondaire (6a) distinct de l'amortisseur principal (5), ledit premier amortisseur secondaire (6a) étant porté par ledit axe d'essieu (2), **caractérisé en ce que** ce premier amortisseur secondaire (6a) comporte:
- une masse d'inertie (M); et
- des moyens de liaison (7a) reliant cette masse d'inertie (M) audit axe d'essieu (2) pour lui permettre de se déplacer suivant au moins un premier axe de déplacement (X1) de cette masse d'inertie (M) par rapport à l'axe d'essieu (2) et pour lui permettre d'osciller suivant cet au moins un premier axe de déplacement (X1) de part et d'autre d'une position fixe de repos par rapport à l'axe d'essieu (2), ces moyens de liaison (7a) étant adaptés à amortir ces déplacements de cette masse d'inertie (M) vis-à-vis dudit axe d'essieu (2) suivant ledit au moins un premier axe de déplacement (X1), ce premier axe de déplacement (X1) s'étendant dans un plan (P) perpendiculaire audit axe principal (Z).

2. Train d'atterrissage selon la revendication 1, dans lequel lesdits moyens de liaison (7a) reliant ladite masse d'inertie (M) audit axe d'essieu (2) comportent :
- des moyens élastiques de rappel (8a) de la masse d'inertie (M) vers ladite position fixe de repos de la masse d'inertie par rapport à l'axe d'essieu (2); et
- des moyens d'amortissement (9a) qui présentent un coefficient d'amortissement de valeur prédéterminée.

3. Train d'atterrissage selon la revendication 2, dans lequel lesdits moyens élastiques de rappel (8a) présentent une valeur de constante de raideur suivant le premier axe de déplacement (X1) de la masse d'inertie (M) par rapport à l'axe d'essieu (2).

4. Train d'atterrissage selon l'une quelconque des revendications 1 à 3, dans lequel ledit premier axe de déplacement (X1) de la masse d'inertie (M) du premier amortisseur secondaire (7a) s'étend le long de l'axe d'essieu (2).

5. Train d'atterrissage selon la revendication 4, dans lequel ledit axe d'essieu (2) est tubulaire, le premier amortisseur secondaire (6a) étant placé à l'intérieur de cet axe d'essieu tubulaire (2).

6. Train d'atterrissage, selon l'une quelconque des revendications 1 à 3, dans lequel ledit axe d'essieu (2) porte un second amortisseur secondaire (6b) comportant :
- une seconde masse d'inertie (M); et
- des seconds moyens de liaison reliant cette seconde masse d'inertie audit essieu pour lui permettre de se déplacer suivant au moins un second axe de déplacement (X2) de cette seconde masse d'inertie (M) par rapport à l'axe d'essieu (2) et pour lui permettre d'osciller suivant cet au moins un second axe de déplacement (X2) de part et d'autre d'une position fixe de repos de cette seconde masse d'inertie (M) par rapport à l'axe d'essieu (2), ces seconds moyens de liaison étant adaptés à amortir ces déplacements de cette seconde masse d'inertie (M) vis-à-vis dudit essieu suivant ledit au moins un second axe de déplacement (X2), ce second axe de déplacement (X2) s'étendant dans un plan perpendiculaire audit axe principal de jambe (Z) et à distance de cet axe principal (Z), l'axe d'essieu s'étendant entre des première et seconde extrémités (2a, 2b) de l'axe d'essieu (2), le premier amortisseur secondaire (6a) étant porté par la première extrémité (2a) de l'axe d'essieu (2) et le second amortisseur secondaire (6b) étant porté par la seconde extrémité (2b) de l'axe d'essieu (2).

7. Train d'atterrissage selon la revendication 6, comportant en outre une première jante (10) pour supporter une première roue de roulage de l'aéronef et une seconde jante pour supporter une seconde roue de roulage de l'aéronef, ces première et seconde jantes étant montées à rotation selon l'axe d'essieu (2), le premier amortisseur secondaire (6a) étant au moins partiellement disposé à l'intérieur d'une zone creuse (10a) de la première jante (10) et le second amortisseur secondaire (6b) étant au moins partiellement disposé à l'intérieur d'une zone creuse de la seconde jante

8. Train d'atterrissage, selon la revendication 7, dans lequel la masse d'inertie (M) du premier amortisseur secondaire (6a) est en forme d'anneau (11) et s'étend autour de la première extrémité (2a) dudit axe d'essieu, la seconde masse d'inertie du second amortisseur secondaire (6b) étant aussi en forme d'anneau (14) et s'étendant autour de la seconde extrémité (2b) dudit axe d'essieu (2).

9. Train d'atterrissage selon la revendication 8, dans lequel lesdits moyens de liaison (7a) adaptés pour relier ladite masse d'inertie (M) dudit premier amortisseur secondaire (6a) audit axe d'essieu (2) comportent un premier anneau de fixation (12) assujetti avec l'axe d'essieu (2) et un manchon annulaire élastique (13) concentrique de la masse d'inertie (M) dudit premier amortisseur secondaire (6a), ce manchon annulaire élastique (13) étant placé entre le premier anneau de fixation (12) et la masse d'inertie (M) du premier amortisseur secondaire (6a).

10. Train d'atterrissage selon la revendication 6, dans lequel les premier et second amortisseurs secondaires (6a, 6b) sont des amortisseurs linéaires, le premier axe de déplacement (X1) de la masse d'inertie (M) du premier amortisseur secondaire (6a) étant parallèle au second axe de déplacement (X2) de la seconde masse d'inertie (M) du second amortisseur secondaire (6b).

11. Train d'atterrissage selon l'une quelconque des revendications précédentes, dans lequel ledit premier axe de déplacement (X1) de la masse d'inertie (M) du premier amortisseur secondaire s'étend à distance de l'axe principal de la jambe.

12. Train d'atterrissage selon l'une quelconque des revendications précédentes comprenant en outre un mécanisme d'orientation (4) adapté à orienter la première partie (3a) de la jambe par rapport à la seconde partie (3b) de la jambe par rotation de la première partie de jambe selon un axe d'orientation parallèle audit axe principal de la jambe (Z).

## Patentansprüche

1. Fahrwerk (1) für ein Luftfahrzeug, umfassend:
- eine Achswelle (2), die ausgebildet ist, um Räder für das Rollen des Luftfahrzeugs auf dem Boden zu tragen;
- ein Bein (3), das einen ersten Teil (3a) aufweist, der die genannte Achswelle (2) trägt, sowie einen zweiten Teil (3b), der daran angepasst ist, mit einer zum Luftfahrzeug gehörenden tragenden Struktur verbunden zu werden, wobei sich dieses Bein entlang einer Hauptachse des Beins erstreckt, die durch diesen ersten und zweiten Teil des Beins hindurchgeht;
- einen Hauptstoßdämpfer (5), der ausgebildet ist, um axiale Bewegungen des ersten Teils des Beins (3a) in Bezug auf den zweiten Teil des Beins (3b) zu dämpfen;
- einen ersten Sekundärstoßdämpfer (6a), der vom Hauptstoßdämpfer (5) verschieden ist, wobei der genannte erste Sekundärstoßdämpfer (6a) von der genannten Achswelle (2) getragen wird, **dadurch gekennzeichnet**, das dieser erste Sekundärstoßdämpfer (6a) umfasst:
- eine Trägheitsmasse (M); und
- Verbindungsmittel (7a), die diese Trägheitsmasse (M) mit der genannten Achswelle (2) verbinden, um ihr eine Bewegung entlang mindestens einer ersten Bewegungsachse (X1) dieser Trägheitsmasse (M) in Bezug auf die Achswelle (2) zu ermöglichen und um ihr ein Schwingen entlang dieser mindestens einen ersten Bewegungsachse (X1) zu beiden Seiten einer festen Ruheposition in Bezug auf die Achswelle (2) zu ermöglichen, wobei diese Verbindungsmittel (7a) daran angepasst sind, diese Bewegungen dieser Trägheitsmasse (M) gegenüber der genannten Achswelle (2) entlang der genannten mindestens einen ersten Bewegungsachse (X1) zu dämpfen, wobei sich diese erste Bewegungsachse (X1) in einer Ebene (P) erstreckt, die senkrecht zur genannten Hauptachse (Z) ist.

2. Fahrwerk nach Anspruch 1, bei dem die genannten Verbindungsmittel (7a), die die Trägheitsmasse (M) mit der genannten Achswelle (2) verbinden, umfassen:
- elastische Rückstellmittel (8a) zum Rückstellen der Trägheitsmasse (M) in Richtung der genannten festen Ruheposition der Trägheitsmasse in Bezug auf die Achswelle (2); und
Stoßdämpfungsmittel (9a), die einen Dämpfungskoeffizienten mit vorgegebenem Wert aufweisen.

3. Fahrwerk nach Anspruch 2, bei dem die genannten elastischen Rückstellmittel (8a) einen Wert einer Steifigkeitskonstanten entlang der ersten Bewegungsachse (X1) der Trägheitsmasse (M) in Bezug auf die Achswelle (2) aufweisen.

4. Fahrwerk nach einem der Ansprüche 1 bis 3, bei dem sich die genannte erste Bewegungsachse (X1) der Trägheitsmasse (M) des ersten Sekundärstoßdämpfers (7a) entlang der Achswelle (2) erstreckt.

5. Fahrwerk nach Anspruch 4, bei dem die genannte Achswelle (2) rohrförmig ist, wobei der erste Sekundärstoßdämpfer (6a) im Inneren dieser rohrförmigen Achswelle (2) platziert ist.

6. Fahrwerk nach einem der Ansprüche 1 bis 3, bei dem die genannte Achswelle (2) einen zweiten Sekundärstoßdämpfer (6b) trägt, umfassend:
- eine zweite Trägheitsmasse (M); und
- zweite Verbindungsmittel, die diese zweite Trägheitsmasse mit der Achswelle verbinden, um ihr ein Bewegen entlang mindestens einer zweiten Bewegungsachse (X2) dieser zweiten Trägheitsmasse (M) in Bezug auf die Achswelle (2) zu ermöglichen und um ihr ein Schwingen entlang dieser mindestens einen zweiten Bewegungsachse (X2) zu beiden Seiten einer festen Ruheposition dieser zweiten Trägheitsmasse (M) in Bezug auf die Achswelle (2) zu ermöglichen, wobei diese zweiten Verbindungsmittel dazu geeignet sind, diese Bewegungen dieser zweiten Trägheitsmasse (M) gegenüber der genannten Achswelle entlang der genannten mindestens einen zweiten Bewegungsachse (X2) zu dämpfen, wobei sich diese zweite Bewegungsachse (X2) in einer Ebene erstreckt, die senkrecht zur genannten Hauptachse (Z) des Beins und beabstandet zu dieser Hauptachse (Z) ist, wobei sich die Achswelle zwischen dem ersten und dem zweiten Ende (2a, 2b) der Achswelle (2) erstreckt, wobei der erste Sekundärstoßdämpfer (6a) von dem ersten Ende (2a) der Achswelle (2) getragen wird und der zweite Sekundärstoßdämpfer (6b) von dem zweiten Ende (2b) der Achswelle (2) getragen wird.

7. Fahrwerk nach Anspruch 6, ferner umfassend eine erste Felge (10) zum Tragen eines ersten Rades für das Rollen des Luftfahrzeugs und eine zweite Felge zum Tragen eines zweiten Rades für das Rollen des Luftfahrzeugs, wobei diese erste und zweite Felge drehend um die Achswelle (2) gelagert sind, wobei der erste Sekundärstoßdämpfer (6a) zumindest teilweise im Inneren einer hohlen Zone (10a) der ersten Felge (10) und der zweite Sekundärstoßdämpfer (6b) zumindest teilweise im Inneren einer hohlen Zone der zweiten Felge angeordnet ist.

8. Fahrwerk nach Anspruch 7, bei dem die Trägheitsmasse (M) des ersten Sekundärstoßdämpfers (6a) die Form eines Rings (11) hat und sich um das erste Ende (2a) der genannten Achswelle herum erstreckt, wobei die zweite Trägheitsmasse des zweiten Sekundärstoßdämpfers (6b) ebenfalls die Form eines Rings (14) hat und sich um das zweite Ende (2b) der genannten Achswelle (2) herum erstreckt.

9. Fahrwerk nach Anspruch 8, bei dem die genannten Verbindungsmittel (7a), die dazu geeignet sind, die genannte Trägheitsmasse (M) des ersten Sekundärstoßdämpfers (6a) mit der Achswelle (2) zu verbinden, einen ersten Befestigungsring (12) umfassen, der an der Achswelle (2) fixiert ist, und eine elastische ringförmige Hülse (13), die konzentrisch zur Trägheitsmasse (M) des ersten Sekundärstoßdämpfers (6a) ist, wobei diese elastische ringförmige Hülse (13) zwischen dem ersten Befestigungsring (12) und der Trägheitsmasse (M) des ersten Sekundärstoßdämpfers (6a) platziert ist.

10. Fahrwerk nach Anspruch 6, bei der der erste und der zweite Sekundärstoßdämpfer (6a, 6b) lineare Stoßdämpfer sind, wobei die erste Bewegungsachse (X1) der Trägheitsmasse (M) des ersten Sekundärstoßdämpfers (6a) parallel zur zweiten Bewegungsachse (X2) der zweiten Trägheitsmasse (M) des zweiten Sekundärstoßdämpfers (6b) ist.

11. Fahrwerk nach einem der vorhergehenden Ansprüche, bei dem sich die genannte erste Bewegungsachse (X1) der Trägheitsmasse (M) des ersten Sekundärstoßdämpfers mit Abstand zur Hauptachse des Beins erstreckt.

12. Fahrwerk nach einem der vorhergehenden Ansprüche, ferner umfassend, einen Ausrichtungsmechanismus (4), der dazu geeignet ist, den ersten Teil (3a) des Beins in Bezug auf den zweiten Teil (3b) des Beins durch Drehung des ersten Teils des Beins um eine Ausrichtungsachse auszurichten, die parallel zur genannten Hauptachse (Z) des Beins ist.

## Claims

1. Landing gear (1) for aircraft, comprising:
- an axle shaft (2) adapted to carry wheels for travel of the aircraft on the ground;
- a leg (3) having a first portion (3a) which carries said axle shaft (2) and a second portion (3b) which is adapted to be connected to a carrying structure belonging to the aircraft, this leg extending along a main axis of the leg which passes through said first and second portions of the leg;
- a main damper (5) adapted to damp axial displacements of the first leg portion (3a) relative to the second leg portion (3b);
- a first secondary damper (6a) separate from the main damper (5), said first secondary damper (6a) being carried by said axle shaft (2), **characterised in that** this first secondary damper (6a) comprises:
- an inertial mass (M); and
- connecting means (7a) which connect this inertial mass (M) to said axle shaft (2) to enable it to move along at least one first axis of displacement (X1) of this inertial mass (M) relative to the axle shaft (2) and to enable it to oscillate along this at least one first axis of displacement (X1) on either side of a fixed resting position relative to the axle shaft (2), these connecting means (7a) being adapted to damp such displacements of this inertial mass (M) relative to said axle shaft (2) along said at least one first axis of displacement (X1), this first axis of displacement (X1) extending in a plane (P) perpendicular to said main axis (Z).

2. Landing gear according to claim 1, wherein said connecting means (7a) which connect said inertial mass (M) to said axle shaft (2) comprise:
- resilient means (8a) for returning the inertial mass (M) towards said fixed resting position of the inertial mass relative to the axle shaft (2); and
- damping means (9a) which have a damping coefficient of a predetermined value.

3. Landing gear according to claim 2, wherein said resilient returning means (8a) have a constant value of stiffness in the direction defined by the first axis of displacement (X1) of the inertial mass (M) relative to the axle shaft (2).

4. Landing gear according to any one of claims 1 to 3, wherein said first axis of displacement (X1) of the inertial mass (M) of the first secondary damper (7a) extends along the axis of the axle shaft (2).

5. Landing gear according to claim 4, wherein said axle shaft (2) is tubular, the first secondary damper (6a) being positioned inside this tubular axle shaft (2).

6. Landing gear, according to any one of claims 1 to 3, wherein said axle shaft (2) carries a second secondary damper (6b) comprising:
- a second inertial mass (M); and
- second connecting means which connect this second inertial mass to said axle to enable it to undergo displacement along at least one second axis of displacement (X2) of this second inertial mass (M) relative to the axle shaft (2) and to enable it to oscillate along this at least one second axis of displacement (X2) on either side of a fixed resting position of this second inertial mass (M) relative to the axle shaft (2), these second connecting means being adapted to damp such displacements of this second inertial mass (M) relative to said axle along said at least one second axis of displacement (X2), this second axis of displacement (X2) extending in a plane perpendicular to said main leg axis (Z) and extending at a distance from this main axis (Z), the axle shaft extending between first and second ends (2a, 2b) of the axle shaft (2), the first secondary damper (6a) being carried by the first end (2a) of the axle shaft (2) and the second secondary damper (6b) being carried by the second end (2b) of the axle shaft (2).

7. Landing gear according to claim 6, also comprising a first rim (10) to support a first wheel for travel of the aircraft and a second rim to support a second wheel for travel of the aircraft, these first and second rims being mounted to rotate on the axis of the axle shaft (2), the first secondary damper (6a) being arranged at least partly within a hollow zone (10a) of the first rim (10) and the second secondary damper (6b) being arranged at least partly within a hollow zone of the second rim.

8. Landing gear, according to claim 7, wherein the inertial mass (M) of the first secondary damper (6a) is in the form of a ring (11) and extends around the first end (2a) of said axle shaft, the second inertial mass of the second secondary damper (6b) also being in the form of a ring (14) and extending around the second end (2b) of said axle shaft (2).

9. Landing gear according to claim 8, wherein said connecting means (7a) adapted to connect said inertial mass (M) of said first secondary damper (6a) to said axle shaft (2) comprise a first fixing ring (12) fastened to the axle shaft (2) and an annular resilient sleeve (13) concentric to the inertial mass (M) of said first secondary damper (6a), this annular resilient sleeve (13) being positioned between the first fixing ring (12) and the inertial mass (M) of the first secondary damper (6a).

10. Landing gear according to claim 6, wherein the first and second secondary dampers (6a, 6b) are linear dampers, the first axis of displacement (X1) of the inertial mass (M) of the first secondary damper (6a) being parallel to the second axis of displacement (X2) of the second inertial mass (M) of the second secondary damper (6b).

11. Landing gear according to any one of the preceding claims, wherein said first axis of displacement (X1) of the inertial mass (M) of the first secondary damper extends at a distance from the main axis of the leg.

12. Landing gear according to any one of the preceding claims, also comprising an orientating mechanism (4) adapted to orient the first portion (3a) of the leg relative to the second portion (3b) of the leg by rotating the first portion of the leg on an axis of orientation parallel to said main axis (Z) of the leg.
